# EUROPÄISCHE PATENTSCHRIFT

(11) **EP 1 227 268 B1**
(45) Veröffentlichungstag und Bekanntmachung des Hinweises auf die Patenterteilung: **19.01.2011**
(21) Anmeldenummer: 01128008.8
(22) Anmeldetag: 24.11.2001
(51) Int. Cl.: F16H 61/16, F16H 59/08, F16H 63/42

(54) **Verfahren zur Erhöhung der Fahrsicherheit beim Betrieb von Fahrzeugen mit integriertem Automatgetriebe durch Signalisierung der Akzeptanz einer gewünschten Fahrzustandsänderung und System zur Steuerung einer Getriebebaueinheit**
Method to enhance safety of vehicle driving with automatic transmission by signaling acceptance of desired change of running state of a vehicle and system for transmission control
Méthode d'amélioration de la sécurité lors de l'utilisation d' un véhicule à transmission automatique par signalisation de l'acceptance d'un changement de l'état de marche de celui-ci et système de contrôle d'une unité de transmission

(30) Priorität: 29.01.2001 DE 10104130; 02.08.2001 DE 10137902
(43) Veröffentlichungstag der Anmeldung: 31.07.2002
(60) Teilanmeldung: 10006793.3
(73) Patentinhaber: Voith Turbo GmbH & Co. KG, 89522 Heidenheim (DE)
(72) Erfinder: Graf, Gottfried, 73466 Röttingen (DE); Bürk, Richard, 88454 Hochdorf (DE); Stark, Uli, 89547 Gerstetten (DE)
(74) Vertreter: Dr. Weitzel & Partner

(56) Entgegenhaltungen:
- DE-A1- 19 810 479
- DE-A1- 19 920 001
- DE-U1- 20 020 621
- DE-U1- 29 919 274

## Beschreibung

Die Erfindung betrifft ein Verfahren zur Erhöhung der Fahrsicherheit beim Betrieb von Fahrzeugen mit integriertem Automatgetriebe durch Signalisierung der Akzeptanz einer gewünschten Fahrzustandsänderung nach Betätigung einer Fahrzustandsvorwahleinrichtung durch Ansteuerung der Getriebebaueinheit, insbesondere Signalisierung des tatsächlich einzustellenden Fahrzustandes nach Betätigung einer Fahrzustandsvorwahleinrichtung durch Ansteuerung der Getriebebaueinheit; ferner ein System zur Steuerung einer Getriebebaueinheit.

In Fahrzeugen eingesetzten Automatgetrieben ist eine Steuervorrichtung mit einer Steuereinrichtung in Form eines Getriebesteuergerätes zugeordnet, welches neben dem Fahrerwunsch eine Mehrzahl bestimmter Größen, die Randbedingungen des Einsatzes beschreibend, verarbeitet und dementsprechend die Stellgrößen zur Betätigung der einzelnen Schaltelemente zur Änderung eines Fahrzustandes bzw. des ausnutzbaren Betriebsbereiches der Antriebsmaschine bildet. Die Vorwahl eines Fahrerwunsches erfolgt in der Regel über eine entsprechende Vorwahleinrichtung, welche in unterschiedlicher Form vorliegen kann. Zunehmend finden dabei, insbesondere im Nutzkraftfahrzeugbereich, Tastschaltereinrichtungen Verwendung, denen gleichzeitig zur Erkennung der aktivierten Taste eine Anzeigeneinheit in Form einer Beleuchtung, die in der Taste integriert ist, zugeordnet ist. Die Vorwahleinrichtung, insbesondere Tastenschaltereinrichtung, ist dabei mit dem Getriebesteuergerät vorzugsweise elektronisch verbunden. Die Kopplung erfolgt in der Regel beim Einsatz in Fahrzeugen über ein

Datenkommunikationsnetz in Form eines CAN-Buses. Die optischen Anzeigenmittel sind dabei derart mit den einzelnen Bedien- bzw. Betätigungselementen der Vorwahleinrichtung gekoppelt, daß eine Betätigung eines bestimmten Bedien- bzw. Betätigungselementes gleichzeitig eine Aktivierung des diesem zugeordneten optischen Anzeigemittels bewirkt. Als vorwählbare Grundfahrzustände werden dabei die nachfolgend genannten Fahrzustände angesehen - "Vorwärtsfahrt", "Rückwärtsfahrt" und "Neutral". Insbesondere der Fahrzustand "Vorwärtsfahrt" kann noch einmal in mehrere Unterzustände unterteilt werden, die die möglichen Gangbereiche charakterisieren. Da es jedoch während des Fahrbetriebes zu Zuständen kommen kann, in denen der aktuelle Fahrerwunsch nicht einstellbar ist und sich das Fahrzeug demzufolge anders verhält, als über die Tastenschaltereinrichtung angezeigt, kann der Fahrer in der Regel nur sehr spät auf ein derartiges Fehlverhalten reagieren. Der Zeitraum des Überraschtseins und ein Fehlverhalten des Fahrzeuges bilden dabei erhebliche Unfallquellen.

Aus der DE 198 10 479 A1 ist ein Automatikgetriebe für Kraftfahrzeuge bekannt, sowie ein Verfahren und ein System nach dem Obergriff des Anspruch 1 bzw. 7. Dieses weist ein elektronisches Getriebesteuergerät mit einem elektrischen Fahrstufenwählelement auf, welches in der Lage ist, eine optische, akustische und/oder haptische Rückmeldung an den Fahrer auszugeben, wenn kein Schaltvorgang mehr möglich ist.

Aus der DE 299 19 274 U1 ist ein Gangwahlschalter zum Einstellen einer Schaltstellung beziehungsweise eines Gangs in einem automatischen Getriebe eines Fahrzeugs bekannt. Dabei ist zum Einstellen einer Schaltstellung beziehungsweise eines Gangs nur ein einziges Bedienelement vorgesehen, über welches die in dem automatischen Getriebe vorhandene Schaltstellung beziehungsweise jeder Gang einstellbar ist. Das Bedienelement ist dafür mit einem Display ausgestattet, welches alphanumerisch oder durch eine entsprechende Symbolik die aktuell eingestellte Schaltstellung beziehungsweise den aktuell eingestellten Gang anzeigt. Das Bedienelement und das Display sind mit einer elektronischen Schaltungsanordnung verbunden, die an einem im Fahrzeug angeordneten Datenbus angeschlossen ist.

Letztlich beschreibt auch die DE 200 20 621 U1 eine Vorwahleinrichtung, insbesondere in Form eines Tastenschalters. Diese ist geeignet zur Vorgabe eines Fahrerwunsches zur Einstellung oder Änderung eines Fahrzustands durch Ansteuerung der Getriebebaueinheit in Antriebssträngen eines Fahrzeugs. Diese weist ein jeweils einem bestimmten Fahrzustand zugeordnetes Bedien- oder Betätigungselement sowie eine diesem zugeordnete optische Anzeigeeinrichtung auf. Der Aufbau der optischen Anzeigeeinrichtung in Form einer Lumineszenzdiode wird dabei im Detail beschrieben.

Der Erfindung lag daher die Aufgabe zugrunde, ein Verfahren zur Erhöhung der Fahrsicherheit beim Betrieb von Fahrzeugen mit integrierten Automatgetrieben durch Signalisierung des tatsächlichen Fahrzustandes nach erfolgter Betätigung einer Fahrzustandsvorwahleinrichtung durch Ansteuerung der Getriebebaueinheit dahingehend zu verbessern, daß für den Fahrer in jedem Fall sicher erkennbar ist, ob der von ihm an der Vorwahleinrichtung getätigte Fahrerwunsch tatsächlich von der zur Getriebebaueinheit gehörenden Steuerung umgesetzt wurde und eingestellt werden kann. Dabei soll auf möglichst einfache Art und Weise eine sichere Rückmeldung über die Akzeptanz des gewählten Fahrzustandes erfolgen, wobei ohnehin zur Steuerung der Getriebebaueinheit erforderliche Größen verarbeitet werden und der steuerungstechnische und konstruktive Aufwand damit minimal gehalten wird. Des weiteren soll ein hohes Maß an der Richtigkeit dieser Information gewährleistet werden.

Die erfindungsgemäße Lösung ist durch die Merkmale der Ansprüche 1 und 10 charakterisiert. Vorteilhafte Ausgestaltungen sind in den Unteransprüchen beschrieben.

Das Verfahren zur Erhöhung der Fahrsicherheit beim Betrieb von Fahrzeugen mit integriertem Automatgetriebe durch Signalisierung des tatsächlichen Fahrzustandes nach erfolgter Betätigung einer Fahrzustandsvorwahleinrichtung, unter der eine manuell betätigbare Vorwahleinrichtung zur Vorgabe eines Fahrerwunsches nach Änderung oder Einstellung eines bestimmten Fahrzustandes zu verstehen ist, durch Ansteuerung der Getriebebaueinheit ist erfindungsgemäß gemäß einem besonders vorteilhaften ersten Lösungsansatz dadurch charakterisiert, daß nach Betätigung der FahrzustandsVorwahleinrichtung vor der Signalisierung der Akzeptanz bzw. der Betätigung des betätigten Betätigungselementes zwei Informationen verarbeitet werden, wobei lediglich bei Vorliegen beider Informationen mindestens ein für den Fahrer erkennbares Signal zur Erkennung, daß der gewünschte Fahrzustand aktiviert wird oder aber, daß der gewünschte Fahrzustand nicht aktivierbar ist, gebildet wird. Im allgemeinen werden dabei wenigstens die folgenden Grundfahrzustände unterschieden:
- Vorwärtsfahrt
- Rückwärtsfahrt
- Neutral- bzw. Leerlauf

Dabei kann der Fahrzustand Vorwärtsfahrt und auch der Fahrzustand Rückwärtsfahrt noch in weitere Unterzustände unterteilbar sein, die durch die Beschränkung der Ausnützbarkeit des Betriebsbereiches einer mit der Getriebebaueinheit gekoppelten Antriebsmaschine charakterisiert sind und in der Regel durch Gangstufen beschreibbar sind. Als Informationen wird dabei eine erste Information über die tatsächlich aktuell eingelegte Gangstufe und eine zweite Information über die Vornahme eines Gangstufenwechsels verarbeitet. Lediglich in dem Fall, in welchem sowohl die Informationen über die aktuell eingelegte Gangstufe als auch eine positive Information über die Vornahme eines Gangstufenwechsels vorliegen, d.h. "Gangstufenwechsel betätigt", werden diese dahingehend ausgewertet, daß der vom Fahrer gewünschte Fahrzustand auch tatsächlich aktiviert wird und ein Signal zur Erkennung der Aktivierung als Bestätigung gebildet wird. Im anderen Fall, d.h. bei Vorliegen beider Informationen, wobei jedoch die Information über die Vornahme eines gerade tatsächlichen Gangstufenwechsels mit einem Inhalt belegt ist, welcher einen momentanen Gangstufenwechsel nicht erfaßt bzw. verneint, wird mindestens ein Signal zur Erkennung, daß der gewünschte Fahrzustand nicht aktivierbar ist, erzeugt. Ist eine der beiden Informationen nicht verfügbar, erfolgt immer eine Fehlermeldung. Diese kann unabhängig von der Art der fehlenden Information sein oder aber abhängig, d.h. jeder Art der Information ist eine unterschiedliche Fehlermeldung zugeordnet.

Die erfindungsgemäße Lösung ermöglicht es, aus ohnehin am Getriebesteuergerät oder über einen CAN-Bus bei Einbindung in ein Datenkommunikationsnetzwerk verfügbaren Größen für den Fahrer auf einfache Art und Weise durch Berücksichtigung zweier Größen eine Information über die Akzeptanz des Fahrerwunschbefehls an der Getriebesteuereinheit und damit Sicherheit bezüglich einer möglichen Rückmeldung zur Einstellung des tatsächlichen Fahrerwunsches zu erhalten. Ein anderes Verhalten am Fahrzeug ist durch Ausgabe der Fehlermeldung für den Fahrer sehr schnell erkennbar und kann mit einer entsprechenden, der Situation angebrachten Reaktion beantwortet werden. Insbesondere bei der bevorzugten Angabe der Akzeptanz des Fahrerwunsches durch Leuchtmittel an Tastschalteinrichtungen, welche durch das gleichmäßige ununterbrochene Leuchten der gewählten Taste charakterisiert ist, kann der Fahrer auf einfache Art und Weise feststellen, ob die von ihm gewünschte Gangstufe oder der Fahrzustand tatsächlich eingestellt werden wird. Alle anderen Signale deuten auf einen Fehler hin und werden vom Fahrer sofort erkannt.

Die Information über die aktuell eingelegte Gangstufe kann dabei beispielsweise aus nachfolgend genannten Größen ermittelt werden:
- Größen, die die Stellung einzelner Schaltelemente, die eine Gangstufe charakterisieren, beschreiben
- Größen, welche das Verhalten der den einzelnen Schaltelementen zugeordneten Stelleinrichtungen beschreiben, beispielsweise Beaufschlagung der Stelleinrichtungen von Ventileinrichtungen, Anlegen von Strömen oder Drücken

Die Informationen über die Vornahme eines Gangstufenwechsels, d.h. einer Änderung der Gangstufen und damit verbunden Deaktivierung der Schaltelemente der gehenden, d.h. zu verlassenden Gangstufe und Aktivierung der Schaltelemente der kommenden, d.h. einzulegenden Gangstufe können ebenfalls aus den genannten Größen ermittelt oder abgeleitet werden oder aber direkt durch die Änderung der Funktionsstellungen oder Beaufschlagung der Schaltelemente ermittelt werden. Diese werden insbesondere aus den die Stelleinrichtung beschreibenden Größen bzw. deren Betätigung wenigstens mittelbar charakterisierende Größen abgeleitet.

Als für den Fahrer erkennbare Signale zur Erkennung der Zustände - gewünschter Fahrzustand wird aktiviert oder gewünschter Fahrzustand ist nicht aktivierbar - können unterschiedliche Signale oder eine Signalkombinationen verwendet werden. Denkbar sind optische Signale, wobei jedem Funktionszustand ein entsprechendes Signal oder Signalkombination zugeordnet ist.

Dabei werden für die Beleuchtung des Tastenschalters die Informationen "Gangstufenwechsel aktiv" aus ETC1 und "aktuell eingelegte Gangstufe" aus ETC2 ausgewertet. Bezüglich der Beleuchtung bei Tastenschaltern wird in der Regel neben dem Zustand "keine Beleuchtung" zwischen der Funktionsbeleuchtung und der Suchbeleuchtung unterschieden, wobei sich beide durch die Intensität unterscheiden. Im wesentlichen wird dabei eine aktive, d.h. gedrückte Taste in der Funktionsbeleuchtung beleuchtet, wenn diese vom Getriebesteuergerät akzeptiert wurde. Ein Blinken oder ein andersartiges Verhalten ist immer dann zu erwarten, wenn diese nicht akzeptiert wurde. Fehlen die obengenannten Informationen vom Betriebesteuergerät, die zur Ansteuerung der Beleuchtung erforderlich sind, wird die Beleuchtung deaktiviert und die Tasten leuchten nur noch in der Suchbeleuchtung. Diese Betriebsweise wird dabei als Standardsbetriebsweise gewählt. Im Fehlerfall, insbesondere bei schweren internen Systemfehlern kann die Gesamtbeleuchtung dabei in den sogenannten Error-Modus wechseln. In diesem Modus wird über alle Anzeigemittel eine Fehlermeldung ausgegeben. In der Regel wechseln dabei alle Tasten zwischen schwacher und hoher Helligkeit.

Die erfindungsgemäße Lösung wird nachfolgend anhand von Figuren erläutert. Darin ist im einzelnen folgendes dargestellt:
- Figur 1: verdeutlicht in schematisch vereinfachter Darstellung den Grundaufbau einer Getriebesteuervorrichtung mit erfindungsgemäß gestaltetem Erkennungssystem;
- Figur 2: verdeutlicht eine besonders vorteilhafte Ausgestaltung einer Getriebesteuervorrichtung mit einem in der Vorwahleinrichtung integriertem Erkennungssystem.

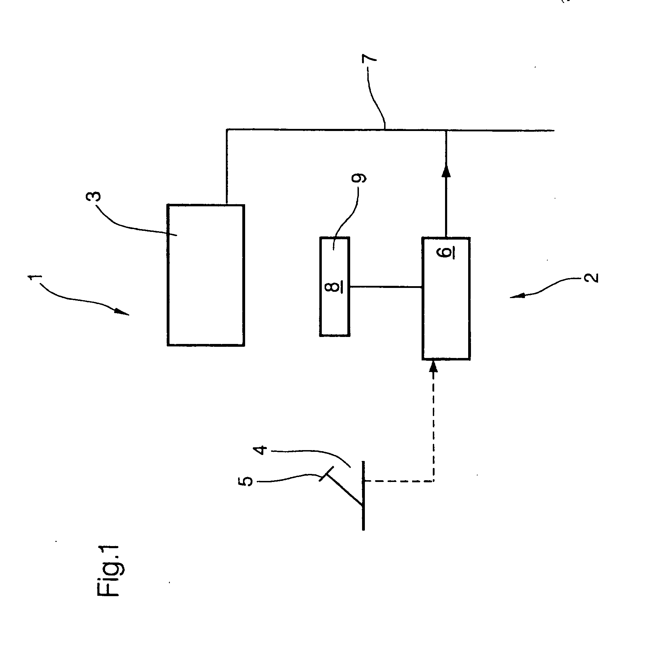

Figur 1 verdeutlicht in stark schematisierter und vereinfachter Darstellung das Grundprinzip eines erfindungsgemäß zur Erhöhung der Fahrsicherheit verwendeten Erkennungssystems 1 zur Signalisierung bzw. Erkennung des tatsächlichen Fahrmodus für den Fahrer beim Einsatz in einem Antriebssystem eines Fahrzeuges. Das Erkennungssystem 1 ist einer Steuervorrichtung zur Einstellung oder Änderung eines Fahrzustandes durch Ansteuerung einer Getriebebaueinheit 3 zugeordnet. Bei der

Getriebebaueinheit 3 handelt es sich dabei um ein Automatgetriebe. Zur Vorgabe eines Fahrerwunsches nach Änderung der Betriebsweise beziehungsweise des Fahrzustandes durch Ansteuerung der Getriebebaueinheit ist eine Fahrzustandsvorwahleinrichtung vorgesehen, welche nachfolgend nur als Vorwahleinrichtung 4 bezeichnet wird. Diese umfaßt wenigstens ein Bedienbeziehungsweise Betätigungselement 5, aus dessen Stellung der Fahrerwunsch nach Änderung der Betriebsweise beziehungsweise des Fahrzustandes ableitbar ist.

Als Fahrzustände werden wenigstens die nachfolgend genannten unterschieden:
- "Vorwärts" oder "Drive" für Vorwärtsfahrt
- "Rückwärts" für Rückwärtsfahrt
- "Neutral", d.h. Leerlauf

Des weiteren besteht die Möglichkeit, diese sogenannten Grundfahrzustände in weitere zu untergliedern, beispielsweise durch Angabe der möglichen ausnutzbaren zulässigen Gangstufen , d.h. der Vorgabe des Ausnutzungsbereiches des Betriebsbereiches der Antriebsmaschine im Zusammenwirken mit dem Getriebe.

Zur Einstellung des gewünschten Fahrzustandes ist die Vorwahleinrichtung 4 mit der Steuervorrichtung 2, insbesondere der zu dieser gehörigen Steuereinrichtung 6, welche in der Regel als Steuergerät vorliegt, verbunden. Dabei besteht die Möglichkeit einer direkten Verbindung zwischen der Vorwahleinrichtung 4 und der Steuereinrichtung 6. Üblicherweise sind diese Einrichtungen jedoch im Fahrzeug über ein Kommunikationsnetz, vorzugsweise in Form eines Can-Buses 7 miteinander verbunden. Das Erkennungssystem 1 umfaßt eine Signaleinrichtung 8, vorzugsweise in Form einer Anzeigeeinheit 9 zur optischen Wiedergabe eines oder mehrerer Signale für den nach Vorwahl eines Fahrzustandes tatsächlich vorliegenden Betriebszustand und damit des Fahrzustandes im Fahrzeug. Dazu werden nach erfolgter Betätigung der Vorwahleinrichtung 4, mit welcher ein Fahrerwunsch nach Änderung oder Einstellung einer bestimmten Betriebsweise beziehungsweise eines bestimmten Fahrzustandes zur Ansteuerung der Getriebebaueinheit 3 kundgetan wird, mindestens zwei Informationen in Form von Botschaften, eine erste Botschaft, welche eine Information über die tatsächlich momentan eingelegte Gangstufe oder den durch diese Gangstufe charakterisierten Fahrmodus enthält und eine zweite Information in Form einer Botschaft über die Verarbeitung des Fahrerwunsches in Form einer Information über die Vornahme des Schaltvorganges bzw. der gewünschten Fahrzustandsänderung ausgewertet. Diese beiden Mindestinformationen werden dabei durch Auswertung zur Erkennung des aktuellen Fahrzustandes genutzt. Dabei werden zwei Zustände unterschieden. Eine Auswertung mit Signalisierung des Fahrzustandes erfolgt dabei nur, wenn beide Informationen vorliegen, d.h. mit einem Inhalt bestückt sind. Fehlt eine Information ganz, erfolgt eine Signalisierung einer Fehlermeldung, bei optischen Signalen beispielsweise in Form eines Blinksignales oder es wird ganz auf die Abgabe eines optischen Signales verzichtet. Der erste Zustand ist dadurch charakterisiert, daß die erste Information über den aktuellen tatsächlich eingelegten Gang nicht verfügbar ist.

Liegen beide Informationen vor und befindet sich das Bedien- beziehungsweise Betätigungselement 5 in einer, einen bestimmten Gangbereich oder Betriebsbereich charakterisierenden Stellung und ist der durch die aktuell eingelegte Gangstufe beschriebene Fahrzustand nicht identisch zu diesem und beinhaltet die zweite Information, daß ein Fahrzustandswechsel nicht vorgenommen wird, wird über das Erkennungssystem 1, insbesondere die Signaleinrichtung 8 in Form der Anzeigeneinheit 9 der tatsächlich vorliegende Fahrzustand angezeigt. Liegen beide Informationen vor, und der Gangstufenwechsel, das heißt die

Änderung des Fahrzustandes ist positiv, wird der mittels dem Bedienbeziehungsweise Betätigungselement 5 vorgewählte Fahrzustand angezeigt. Durch die Verarbeitung der beiden genannten Informationen kann der aktuelle Betriebszustand sicher angezeigt werden. Für den Fahrer bietet dies ein höchstes Maß an Sicherheit, da dieser somit auf ein Verhalten des Fahrzeuges, welches nicht dem Fahrerwunsch entspricht, rasch reagieren kann.

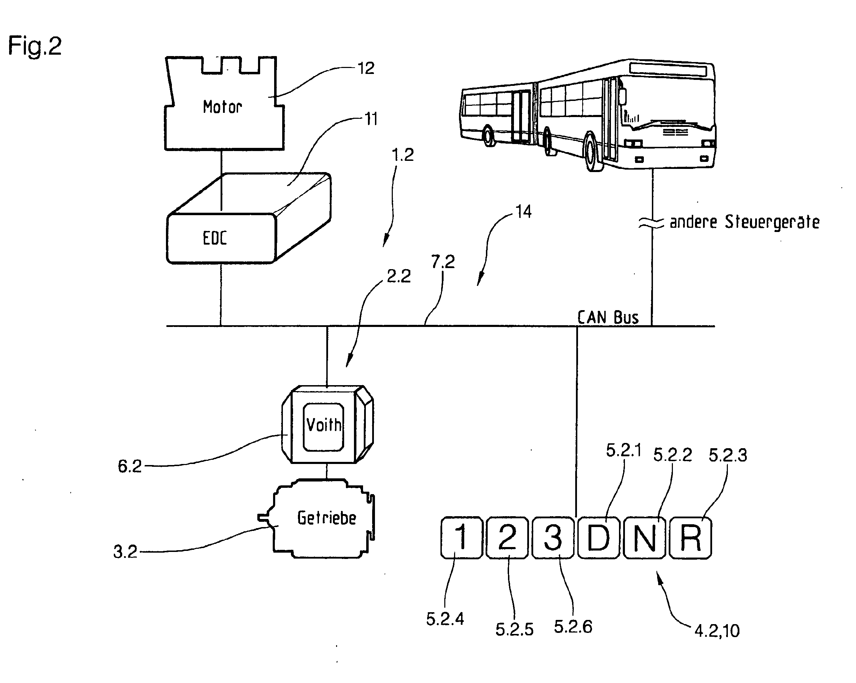

Die Figur 2 verdeutlicht anhand einer schematisierten Darstellung eine vorteilhafte Ausgestaltung eines Erkennungssystems 1.2 für eine Getriebebaueinheit 3.2 mit einer Vorwahleinrichtung 4.2 in Form einer Tastenschalteinrichtung 10. Der Getriebebaueinheit 2 ist eine Steuervorrichtung 2.2 zugeordnet. Diese ist über ein Datenkommunikationsnetzwerk in Form des Can-Buses 7.2 mit anderen Steuergeräten sowie der Vorwahleinrichtung 4.2 und der Steuerung 11 für die Antriebsmaschine 12 in Form einer Verbrennungskraftmaschine verbunden. Die Tastenschalteinrichtung 10 umfaßt dabei mindestens drei Bedienelemente 5.2.1 bis 5.2.3 für die unterschiedlichen Fahrzustände - Vorwärtsfahrt, Rückwärtsfahrt und die Leerlaufposition, welche auch als Neutralstellung bezeichnet wird. Zusätzlich können die Fahrzustandsbereiche durch weitere, diese in mehrere Betriebsbereiche unterteilende Gangstufenbereiche eingeteilt werden. Im dargestellten Fall sind dabei für die einzelnen Fahrzustandsbereiche D für Vorwärtsfahrt, N für die Leerlaufposition und R für die Rückwärtsfahrt jeweils die Bedien- beziehungsweise Betätigungselemente 5.2.1 bis 5.2.3 vorgesehen, wobei zusätzlich der Fahrzustandsbereich für die Vorwärtsfahrt in drei Gangstufenbereiche 5.2.4 bis 5.2.6 unterteilt ist. Die Vorwähleinrichtung 4 ist elektronisch über den Can-Bus 7.2 mit der Steuervorrichtung 2, insbesondere der Steuereinrichtung 11 der Getriebebaueinheit 3 gekoppelt. Die Anzeigeneinheit 9.2 ist dabei mit der Vorwahleinrichtung 4.2 zu einer baulichen Einheit zusammengefaßt. Insbesondere ist jedem einzelnen

Bedien- beziehungsweise Betätigungselement 5.2.1 bis 5.2.n eine entsprechende optische Anzeigeeinrichtung in Form einer Lumineszenzdiode oder einer Glühlampe zugeordnet. Dabei werden in einer besonders vorteilhaften Ausgestaltung zwei Grundzustände für die Beleuchtung unterschieden - eine Beleuchtung mit schwacher Helligkeit, welche auch als sogenannte Suchbeleuchtung bezeichnet wird und die Funktionsbeleuchtung, das heißt eine Beleuchtung mit hoher Helligkeit sowie als dritter möglicher Zustand ein Fehlen der Beleuchtung. Die Steuerung der Helligkeit erfolgt dabei durch Pulsweitenmodulation, wobei die Helligkeit für die beiden Zustände Suchbeleuchtung und Funktionsbeleuchtung getrennt über Konfigurationsbotschaften eingestellt werden kann. Zur Einstellung der Helligkeit kann eine Regelung vorgesehen werden, die in Abhängigkeit von der Betriebsspannung die Pulsweite korrigiert, um ein definiertes Helligkeitsverhalten zu erzielen.

In der Regel werden beim Systemstart, beispielsweise bei Inbetriebnahme des Fahrzeuges durch Aktivierung des Zündschlüssels alle Leuchtmittel in Betrieb genommen, wobei diese im Zustand "Suchbeleuchtung" betrieben werden. Um eine sichere Anzeige des aktuellen Fahrzustandes zu gewährleisten, werden erfindungsgemäß die Informationen über die Aktivierung eines Schaltvorganges und den aktuell eingelegten Gang ausgewertet. Die einzelnen Botschaften werden dabei in vorteilhafter Weise über den Can-Bus 7.2 bezogen. Vorzugsweise wird das Gesamtsystem 14 im SAE-J1939-Modus betrieben. Entsprechend dieses Protokolls sind die Informationen über einen eingeleiteten Schaltvorgang in ETC1 enthalten, während die Informationen bezüglich der aktuellen Gangstufe in ETC2 abgelegt sind. Diese Informationen werden ausgewertet, wobei die Auswertung entweder direkt in einer der Vorwahleinrichtung 4.2 zugeordneten Intelligenz erfolgen kann, oder aber über die Steuereinrichtung 6.2 der Getriebebaueinheit 3.2. Dabei wird angestrebt, daß immer eine aktive, das heißt betätigte Taste als Bedien- beziehungsweise Betätigungselement 5.2.1 bis 5.2.n in der Funktionsbeleuchtung leuchtet, das heißt, daß dieser Taste zugeordnete Leuchtmittel in Funktionsbeleuchtung aktiviert wird, wenn die über die Vorwahleinrichtung 4.2 vorgegebene Auswahl vom Getriebesteuergerät 6.2 akzeptiert wurde. Bei Nicht-Akzeptanz wird ein anderes optisches Signal in Form einer Fehlermeldung, beispielsweise eines Wechsels zwischen Suchbeleuchtung und Funktionsbeleuchtung erzeugt. Fehlen die oben genannten Informationen, wird die Beleuchtung deaktiviert und die den Bedien- beziehungsweise Betätigungselementen 5.2.1 bis 5.2.n zugeordneten Anzeigemittel zur Ausgabe eines optischen Signales leuchten nur noch in der Suchbeleuchtung.

Bei Nichtverfügbarkeit der Information über die tatsächlich aktuell eingelegte Gangstufe wird die Beleuchtung deaktiviert. Dies bedeutet, daß die Anzeigemittel nur noch schwach leuchten, insbesondere bei Zuordnung zu jedem einzelnen Bedien- beziehungsweise Betätigungselement 5.2.1 bis 5.2.n.. Fehlt dabei die Information über die Vornahme eines Gangstufenwechsels, das heißt die Betätigung der entsprechenden Schaltelemente für den gewünschten einzulegenden Fahrzustand beziehungsweise Gang, kann dies durch ein Blinken, welches jedoch bei späterer Akzeptanz zur Beleuchtung wechseln kann.

Bezugnehmend auf die dargestellte Ausführung der Tastschalteinrichtung 10.2 werden nachfolgend einige mögliche Zustände genannt:
- Betätigung der Bedien- beziehungsweise Betätigungselement 5.2.4, 5.2.5 und 5.2.6 und/oder Betätigung des Betätigungselementes 5.2.1 für die Wahl des Fahrzustandes Vorwärtsfahrt und Information über die aktuell eingelegte Gangstufe beziehungsweise den aktuell eingelegten Fahrzustand "Neutralstellung" oder "Rückwärtsfahrt" und die Information bezüglich des Schaltvorganges mit dem Inhalt, daß gerade kein Schaltvorgang aktiv ist, bewirkt, daß die an der
   Vorwahleinrichtung 4.2 betätigte Taste als Bedien- beziehungsweise Betätigungselement 5.2.n durch die dieser zugeordnete Anzeigeeinrichtung 13 zur Ausgabe eines optischen Signales in Form eines Blinkens aktiviert wird. Fehlt dabei die Information über die aktuelle Vornahme eines Schaltprozesses gänzlich und ist lediglich die Information über ETC2 verfügbar, wird nur der tatsächlich über das Steuergerät 11 beziehungsweise den CAN-Bus ermittelte Gang an der Tastschalteinrichtung 10 angezeigt. Dies bedeutet, daß nur die Taste, das heißt das Bedien- beziehungsweise Bedienelement 5 aktiviert ist, welches dem tatsächlich eingelegten Gang beziehungsweise Fahrzustand entspricht. Sind irrtümlicherweise mehrere Tasten gleichzeitig betätigt, wird lediglich das Bedien- beziehungsweise Betätigungselement angezeigt, welches über den Can-Bus 7.2 übermittelt wird. Dabei wird in der Regel die kleinste Gangsperrtaste angegeben, das heißt die Gangstufe die eingelegt ist und nicht überschritten werden kann.
- Bei Betätigung des Bedienelementes 5.2.3 für "Rückwärtsfahrt" und Vorliegen einer Information über die eingelegte Gangstufe oder den aktuellen Fahrzustand in "Leerlaufstellung" oder "Vorwärtsfahrt" und Information über die Vornahme eines Gangstufenwechsels, welche eine Nichtvornahme beinhaltet, bewirkt eine Anzeige an der aktuell gedrückten Taste, hier dem Bedien- beziehungsweise Betätigungselement 5.3.3 für die Rückwärtsfahrt. Sind gleichzeitig mehrere Tasten, das heißt Bedienbeziehungsweise Betätigungselemente 5.2.1 bis 5.2.n betätigt, wird immer das Bedien- beziehungsweise Betätigungselement 5.2.1 bis 5.2.n angezeigt, insbesondere beleuchtet, dessen Stellung über CAN ermittelt wird.

Nur im Fehlerfall wechselt die Beleuchtung in den sogenannten Errormode. In diesem werden im Falle der Tastschalteinrichtung 10 alle Bedienbeziehungsweise Betätigungselemente beleuchtet. Die Blinkzeiten sind dabei parametrierbar.

### Bezugszeichenliste

- 1: Erkennungssystem
- 2: Steuervorrichtung
- 3: Getriebebaueinheit
- 4: Vorwahleinrichtung
- 5: Bedien- beziehungsweise Betätigungselement
- 6: Steuereinrichtung
- 7: Can-Bus
- 8: Signaleinrichtung
- 9: Anzeigeeinheit
- 10: Tastschaltereinrichtung
- 11: Steuereinrichtung
- 12: Antriebsmaschine
- 13: Anzeigemittel
- 14: System

## Patentansprüche

1. Verfahren zur Erhöhung der Fahrsicherheit beim Betrieb von Fahrzeugen mit integriertem Automatgetriebe (3) durch Signalisierung der Akzeptanz einer gewünschten Fahrzustandsänderung nach Betätigung einer Fahrzustandsvorwahleinrichtung (4) durch Ansteuerung der Getriebebaueinheit (3); wobei wenigstens die folgenden Grundfahrzustände unterschieden werden:
- Vorwärts
- Rückwärts
- Neutral bzw. Leerlauf;
1.1 bei welchem mindestens ein, die Betätigung der Fahrzustandsvorwahleinrichtung (4) charakterisierendes und für den Fahrer erkennbares Signal gebildet werden kann;
1.2 bei welchem nach Betätigung der Fahrzustandsvorwahleinrichtung (4) eine erste Information über die aktuell eingelegte Gangstufe im Automatgetriebe und eine zweite Information, welche die Vornahme eines Gangstufenwechsels zu diesem Zeitpunkt oder die Vornahme eines geringfügig verspäteten tatsächlichen Gangstufenwechsels charakterisiert, ermittelt und ausgewertet werden;
1.3 bei welchem bei Vorliegen beider Informationen jeweils mindestens ein für den Fahrer erkennbares Signal zur Erkennung für einen der nachfolgenden Zustände gebildet wird;
- der über die Fahrzustandsvorwahleinrichtung(4) gewünschte Fahrzustand wird aktiviert
oder
- der über die Fahrzustandsvorwahleinrichtung (4) gewünschte Fahrzustand ist nicht aktivierbar,
wobei die Signale für die genannten Zustände unterschiedlich voneinander sind, wobei
1.4 die Signale zur Erkennung der Zustände von optischen Signalen gebildet werden,
1.5 bei welchem die Vorwahleinrichtung (4) als Tastenschalter (10) mit mindestens einem Betätigungselement (5) für jeden vorwählbaren Fahrzustand ausgeführt ist, und jedem Betätigungselement (5) ein Leuchtmittel zugeordnet ist, wobei jedes Leuchtmittel in den drei nachfolgend genannten Leuchtzuständen betrieben werden kann:
- keine Beleuchtung
- Suchbeleuchtung, d.h. Beleuchtung mit schwacher Helligkeit
- Funktionsbeleuchtung, d. h. Beleuchtung mit starker Helligkeit **dadurch gekennzeichnet, dass**
1.6 im Zustand "gewünschter Fahrzustand wird aktiviert" das dem betätigtem Betätigungselement (5) zugeordnete Leuchtmittel in Funktionsbeleuchtung betrieben wird;
1.7 im Zustand "gewünschter Fahrzustand wird nicht
aktiviert" das dem betätigten Betätigungselement (5) zugeordnete Leuchtmittel wechselweise in Funktions- und Suchbeleuchtung betrieben wird.

2. Verfahren nach Anspruch 1, **dadurch gekennzeichnet, daß** der Zustand "gewünschter Fahrzustand wird aktiviert" durch ein optisches Signal mit gleichbleibender Helligkeit gebildet wird.

3. Verfahren nach Anspruch 1 oder 2, **dadurch gekennzeichnet, daß** die Fehlermeldung oder das Signal für den Zustand "gewünschter Fahrzustand nicht aktivierbar" durch zeitlich wechselweise Helligkeit charakterisiert ist.

4. Verfahren nach Anspruch 1, **dadurch gekennzeichnet, daß** bei Fehlen der ersten Information die Leuchtmittel in Suchbeleuchtung betrieben werden.

5. Verfahren nach Anspruch 1, **dadurch gekennzeichnet, daß** bei Fehlen der zweiten Information das Leuchtmittel, welches dem Betätigungselement (5) zugeordnet ist, das der tatsächlich eingelegten Gangstufe an der Vorwahleinrichtung (4) entspricht, in Funktionsbeleuchtung betrieben wird.

6. Verfahren nach einem der Ansprüche 1 bis 5, **dadurch gekennzeichnet, daß** mindestens der Grundfahrzustand "Vorwärts" in weitere Betriebszustände in Form von zulässigen Gangstufen unterteilt wird.

7. System zur Steuerung einer Getriebebaueinheit (3)
7.1 mit einer der Getriebebaueienheit (3) zugeordneten Steuereinrichtung (6);
7.2 mit einer Vorwahleinrichtung (4), umfassend mindestens ein Betätigungselement(5) zur Vorgabe eines Fahrerwunsches zur Änderung oder Einstellung des Fahrzustandes, welches elektronisch oder drahtlos mit der Steuervorrichtung (2) gekoppelt ist;
7.3 mit einem Erkennungssystem (1) zur Erkennung der Akzeptanz eines gewünschten Fahrzustandswechsels;
7.4 das Erkennungssystem (1) umfaßt eine Signalisierungseinrichtung (8) zur Ausgabe erkennbarer Signale für den Fahrer;
7.5 das Erkennungssystem (1) umfaßt Erfassungseinrichtungen zur Erfassung mindestens einer, die aktuell eingelegte Gangstufe und die Vornahme eines Gangstufenwechsels charakterisierenden Größe und Generierung entsprechender Signale;
7.6 das Erkennungssystem (1) umfaßt eine Auswerteinrichtung zur Auswertung der mittels der Erfassungseinrichtungen generierten Signale und Mittel zur Ansteuerung der Signalisierungseinrichtungen (8), **gekennzeichnet durch** die folgenden Merkmale:
7.7 die Vorwahleinrichtung (4) wird von einem Tastenschalter (10), umfassend mindestens jeweils ein jedem Fahrzustand zuordenbares Betätigungselement (5), gebildet;
7.8 jedem Betätigungselement (5) ist eine optische Anzeigeeinheit zugeordnet;
7.9 die Anzeigeeinheiten (13) bilden die Anzeigeeinrichtung (8) und sind mit der Auswerteinrichtung elektronisch gekoppelt.

8. System nach Anspruch 7, **dadurch gekennzeichnet, daß** die Auswerteinrichtung und Mittel zur Ansteuerung der Signalisierungseinrichtungen (8) von der der Getriebebaueinheit (3) zugeordneten Steuereinrichtung (6) gebildet werden.

9. System nach Anspruch 7 oder 8, **dadurch gekennzeichnet, daß** die Kopplung zwischen Vorwahleinrichtung (4) und Steuereinrichtung über ein Datenkommunikationsnetzwerk in Form eines CAN-Buses (7) erfolgt.

10. System nach einem des Anspruche 7-9, **dadurch gekennzeichnet, daß** die Anzeigeeinrichtung (8) und die Vorwahleinrichtung (4) in einer baulichen Einheit zusammengefaßt sind.

11. System nach Anspruch 7, **dadurch gekennzeichnet, daß** die Betätigungselemente (5) von Tasten gebildet werden und die Anzeigeeinheiten (13) in den Tasten integriert sind oder in unmittelbarer räumlicher Nähe angeordnet sind.

12. System nach Anspruch 7, **dadurch gekennzeichnet, daß** die Betätigungselemente (5) von Tasten gebildet werden und die Anzeigeeinheiten (13) von einem Display gebildet werden.

## Claims

1. A method for enhancing the driving safety when operating vehicles with integrated automatic transmission (3) by signalling the acceptance of a requested change of driving mode after actuation of a driving mode preselection system (4) through operation of the transmission unit (3); whereas at least the following basic driving modes are distinguished:
Forward
Reverse
Neutral or Idle;
1.1 wherein at least one driver-recognisable signal, characterising the actuation of the driving mode preselection system (4) can be formed;
1.2 for which after actuation of the driving mode preselection system (4) a first piece of information is obtained and interpreted via the currently selected gear position in the automatic transmission as well as a second piece of information is obtained and interpreted, which characterises the realisation of a gear position shift at this precise moment or the realisation of a slightly delayed actual gear shift;
1.3 wherein in consideration of both pieces of information respectively at least one driver-recognisable signal is formed for recognising one of the following conditions:
the desired driving mode is activated via the driving mode preselection system (4) or the desired driving mode cannot be activated via the driving mode preselection system (4),
whereas the signals are distinct from one another for the aforementioned conditions, wherein
1.4 the signals for recognising the conditions are composed of optical signals,
1.5 for which the preselection device (4) is provided as a key switch (10) with at least one actuating element (5) for each preselectable driving mode, and whereas an illumination means is allocated to each actuating element (5), whereas every illumination means can be operated in the three illumination modes subsequently mentioned:
- no illumination
- search illumination, i.e. illumination with low brightness
- function illumination, i.e. illumination with high brightness **characterised in that**
1.6 in the "desired driving mode activated" mode, the illumination means assigned to the actuated actuating element (5) is operated in function illumination;
1.7 in the "desired driving mode not activated" mode, the illumination means assigned to the actuated actuating element (5) is operated alternately in function and search illumination.

2. A method according to claim 1, **characterised in that** the "desired driving mode activated" mode is formed by an optical signal with uniform brightness.

3. A method according to claim 1 or 2, **characterised in that** the error message or the signal corresponding to the "impossible to activate the desired driving mode" mode is **characterised by** a brightness temporarily flashing.

4. A method according to claim 1, **characterised in that** in case of erroneous first piece of information the illumination means are operated in search illumination.

5. A method according to claim 1, **characterised in that** in case of erroneous second piece of information, the illumination means which is associated with the actuating element (5) actually corresponding to the selected gear position on the preselection device (4), is operated in function illumination.

6. A method according to claim 1 to 5, **characterised in that** at least the "forward" basic driving mode in subdivided into additional operating modes in the form of admissible gear positions.

7. A system for controlling a transmission unit (3)
7.1 with a control device (6) allocated to the transmission unit (3);
7.2 with a preselection device (4), comprising at least one actuating element (5) for setting a driver's wish to modify or adjust the driving mode, which is coupled with the control device (2) electronically or wireless;
7.3 with a recognition system (1) for recognising the acceptance of a requested driving mode;
7.4 the recognition system (1) includes a signalling device (8) for outputting driver- recognisable signals;
7.5 the recognition system (1) includes acquisition devices for acquiring at least one value characterising the currently selected gear and the realisation of a gear position shift for the generation of corresponding signals;
7.6 the recognition system (1) includes an interpretation device for interpreting the signals generated by means of the acquisition devices and means for operating the signalling devices (6), **characterised by** the following features:
7.7 the preselection device (4) is composed of a key switch (10), at least comprising one actuating element (5) which can be assigned to every driving mode;
7.8 an optical display device is associated with each actuating element (5);
7.9 the display units (13) form the display device (8) and are coupled electronically with the interpretation device.

8. A system according to claim 7, **characterised in that** the interpretation device and the means for operating the signalling devices (8) consist of the control device (6) allocated to the transmission unit (3).

9. A system according to claim 7 or 8, **characterised in that** the coupling between preselection device (4) and control device makes use of a data communication network in the form of a CAN bus (7).

10. A system according to any of the claims 7 - 9, **characterised in that** the display device (8) and the preselection device (4) are regrouped in one construction unit.

11. A system according to claim 7 **characterised in that** the actuating elements (5) consist of keys and the display units (13) are integrated in the keys or are arranged in immediate spatial proximity.

12. A system according to claim 7, **characterised in that** the actuating elements (5) consist of keys and the display units (13) consist of a display.

## Revendications

1. Procédé permettant d'améliorer la sécurité de conduite des véhicules disposant d'une transmission automatique intégrée (3) par signalisation de l'acceptation d'une demande de changement de mode de conduite après activation d'un système de présélection de mode de conduite (4) par sollicitation de l'unité de transmission (3); où l'on peut distinguer au moins les modes de conduite de base suivants:
Marche avant
Marche arrière
Point mort ou ralenti;
1.1 dans lequel au moins un signal reconnaissable par le conducteur, caractérisant l'actionnement du système de présélection de mode de conduite (4) peut être élaboré;
1.2 pour lequel après actionnement du système de présélection de mode de conduite (4) une première information est obtenue et interprétée par le biais de la vitesse sélectionnée à ce moment au niveau de la transmission automatique de même qu'une seconde information est obtenue et interprétée, qui caractérise la réalisation d'un changement de vitesse à ce moment précis ou la réalisation d'un changement de vitesse légèrement décalé;
1.3 où au regard des deux informations, respectivement au moins un signal reconnaissable par le conducteur est élaboré pour reconnaîre l'un des cas de figure suivants:
le mode de conduite désiré est actionné par le biais du système de présélection de mode de conduite (4) ou bien le mode de conduite désiré ne peut pas être actionné par le biais du système de présélection de mode de conduite (4),
où les signaux sont distincts les uns des autres pour les cas de figure mentionnés ci-dessus, à savoir
1.4 les signaux permettant de reconnaître les différents modes de conduite se composent de signaux optiques,
1.5 pour lequel le dispositif de présélection (4) est prévu sous forme d'interrupteur à clé (10) avec au moins un élément d'actionnement (5) pour chaque mode de conduite présélectable, et où un moyen d'éclairage est assigné à chaque élément d'actionnement (5), chaque moyen d'éclairage pouvant être sollicité dans les modes d'éclairage mentionnés ci-dessous:
- aucun éclairage
- éclairage de recherche, soit un éclairage de faible luminosité
- éclairage de fonction, soit un éclairage de forte luminosité **caractérisé en ce que**
1.6 en mode dit de "mode de conduite désiré actionné", le moyen d'éclairage assigné à l'élément d'actionnement (5) sollicité fonctionne en éclairage de fonction;
1.7 en mode dit de "mode de conduite désiré non actionné", le moyen d'éclairage assigné à l'élément d'actionnement (5) sollicité fonctionne de manière alternée en éclairage de fonction et en éclairage de recherche.

2. Procédé selon la revendication 1, **caractérisé en ce que** le mode dit de "mode de conduite désiré actionné" est élaboré par un signal optique de luminosité uniforme.

3. Procédé selon la revendication 1 ou 2, **caractérisé en ce que** le message d'erreur ou le signal correspondant au mode "impossible d'actionner le mode de conduite désiré" est **caractérisé par** une luminosité temporairement clignotante.

4. Procédé selon la revendication 1, **caractérisé en ce qu'**en cas de première information erronée, les moyens d'éclairage passent en éclairage de recherche.

5. Procédé selon la revendication 1, **caractérisé en ce qu'**en cas de seconde information erronée, le moyen d'éclairage associé à l'élément d'actionnement (5) correspondant effectivement à la vitesse sélectionnée au niveau du dispositif de présélection (4), passe en éclairage de fonction.

6. Procédé selon les revendications 1 à 5, **caractérisé en ce qu'**au moins le mode de conduite de base "marche avant" est subdivisé en modes d'exploitation supplémentaires sous forme de vitesses admissibles.

7. Système de commande d'unité de transmission (3)
7.1 équipé d'un dispositif de commande (6) assigné à l'unité de transmission (3);
7.2 d'un dispositif de présélection (4), comprenant au moins un élément d'actionnement (5) permettant de définir le souhait du conducteur afin de modifier ou d'ajuster le mode de conduite, dispositif par ailleurs couplé au dispositif de commande (2) électroniquement ou sans fil;
7.3 d'un système de reconnaissance (1) permettant de reconnaître l'acceptation d'un mode de conduite demandé;
7.4 le système de reconnaissance (1) comporte un dispositif de signalisation (8) permettant de générer des signaux reconnaissables par le conducteur;
7.5 le système de reconnaissance (1) comporte un dispositif d'acquisition permettant d'acquérir au moins une valeur caractérisant la vitesse sélectionnée à ce moment et la réalisation d'un changement de vitesse afin de générer les signaux correspondants;
7.6 le système de reconnaissance (1) comporte un dispositif d'interprétation permettant d'interpréter les signaux générés par le dispositif d'acquisition et des moyens de commande du dispositif de signalisation (6), présentant les caractéristiques ci-dessous:
7.7 le dispositif de présélection (4) est constitué d'un interrupteur à clé (10), comprenant au moins un élément d'actionnement (5) pouvant être assigné à chaque mode de conduite;
7.8 un dispositif d'affichage optique est associé à chaque élément d'actionnement (5);
7.9 les unités d'affichage (13) constituent le dispositif d'affichage (8) et sont couplés électroniquement au dispositif d'interprétation.

8. Système selon la revendication 7, **caractérisé en ce que** le dispositif d'interprétation et le moyen d'actionnement du dispositif de signalisation (8) se composent du dispositif de commande (6) assigné à l'unité de transmission (3).

9. Système selon la revendication 7 ou 8, **caractérisé en ce que** l'accouplement entre le dispositif de présélection (4) et le dispositif de commande fait appel à un réseau de communication de données sous forme de bus CAN (7).

10. Système selon l'une quelconque des revendications 7 à 9, **caractérisé en ce que** le dispositif d'affichage (8) et le dispositif de présélection (4) sont regroupés dans une seule unité de construction.

11. Système selon la revendication 7, **caractérisé en ce que** les éléments d'actionnement (5) se composent de touches et que les unités d'affichage (13) sont intégrées aux touches ou bien situées à proximité spatiale immédiate de celles-ci.

12. Système selon la revendication 7, **caractérisé en ce que** les éléments d'actionnement (5) se composent de touches et que les unités d'affichage (13) se composent d'un affichage.
